# EUROPEAN PATENT APPLICATION

(11) **EP 0 969 578 A1**
(43) Date of publication of application: **05.01.2000**
(21) Application number: 99304122.7
(22) Date of filing: 27.05.1999
(51) Int. Cl.: H02G 7/05

(54) **Helical fitting components for the securing of covered conductor and method of production thereof**

(30) Priority: 29.05.1998 GB 9811642
(71) Applicant: Preformed Line Products (Great Britain) Limited, Andover, Hants SP10 3LH (GB)
(72) Inventor: Swain, Trevor, Botley, Southhampton, Hampshire S030 2SX (GB); Holloway, Brian James, Andover, Hampshire SP11 7NW (GB)
(74) Representative: Dawson, Elizabeth Ann

(57) **Abstract**

A component for securing a covered conductor to an insulator comprises a length of metal wire having at least one helical portion, the wire being coated with a semi-conductive coating material. The semi-conductive coating of the component reduces voltage stresses along the length of the conductor adjacent to the insulator, to reduce the chance of the conductor arcing. Preferably, the metal wire is in the shape of an arcuate portion which locates around the neck of the insulator, and one or two extending helical legs which are wrapped around the covered conductor.

## Description

The present invention relates to a helical fitting for securing covered conductors to insulators, and a method of production thereof.

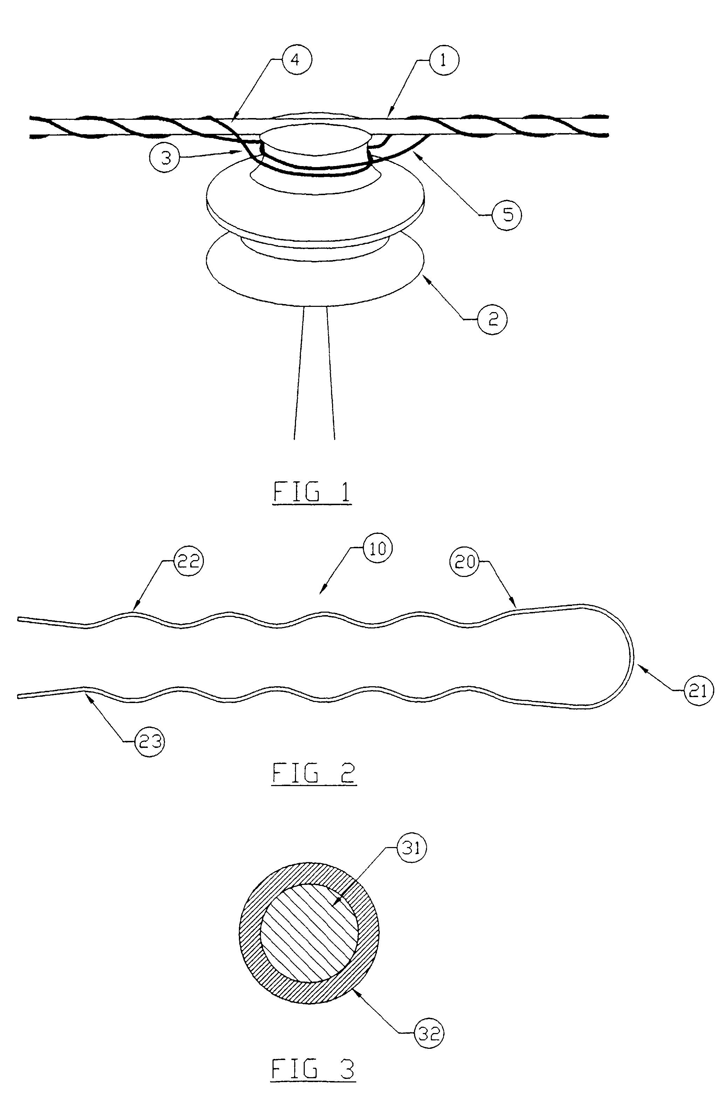

In situations where it is necessary to support overhead covered conductors, each covered conductor normally rests in a locating groove on an insulator. In order to hold the covered conductor in position a helical fitting is commonly used to secure the covered conductor to the insulator. A typical situation is illustrated in Figure 1. A cable 1 is supported on an insulator 2 and held in place by helical fitting 3 comprising two components 4, 5. Each component comprises a length of wire factory formed in the shape of an arcuate portion having two extending helical portions, such that the arcuate portion locates around the neck of the insulator and the helical portions are wrapped around and grip the covered conductor. The wires are currently produced in various metals and sizes to suit each specific application, ie aluminium covered steel, with a typical diameter of 2.9mm.

Typically, helical fittings comprise subsetted wires. In this case, several wires may be supplied bonded together to form one component, such that they can be readily applied to the covered conductor with little extra effort than would be required to fit a single wire fitting.

Where such helical fittings are used with a covered conductor, it is necessary to reduce voltage stresses along the length of the conductor adjacent to the insulator. This will reduce the chance of conductor arcing and therefore diminishes the possibility of the occurrence of RIV (radio interference voltage) as detailed to the Post Office memorandum A231(b) (issued under Engineering Recommendation Po.2, reference - Electricity Supply Industry Standard 43.15).

This is commonly achieved by wrapping a semi-conductive tape around the relevant portion of the covered conductor, before the bare metal helical fitting is applied.

However, this process can be very time-consuming, since it is necessary to cover the covered conductor over a length of typically 1.2m, in order to cater for the extension of the helical fitting in both directions about the insulator. Furthermore, care must be taken to ensure 50% overlap of the semi-conductive tape as it is wrapped around the covered conductor, to ensure total coverage.

In order to overcome this problem, helical fittings have been produced using a length of PVC with a co-extruded semi-conductive layer, which is formed into the shape described above. When the helical fitting is in position around the covered conductor, the semi-conductive layer on the helical fitting removes the need to apply semi-conductive tape to the covered conductor.

However, this method of extruding and forming the helical fitting is only suitable for producing a helical fitting with a semi-conductive layer on a PVC core, and such these fittings have been found to have less inherent strength than the traditional metal kind.

Therefore, alternative helical fittings are desirable, which have high durability but also eliminate the need to apply semi-conductive tape to the covered conductor.

One aspect of the present invention provides a component for securing a covered conductor to an insulator, comprising a length of metal wire having at least one helical portion, the wire being coated with a semi-conductive coating material.

In a preferred embodiment, the metal wire is in the shape of an arcuate portion having two extending helical legs, although in some applications only one helical leg will be required.

Preferably, the metal wire is of a sufficient diameter and form to allow single wire components to provide the required holding strength. In a preferred embodiment, the diameter of the core is between 3.6mm and 3.7mm, preferably 3.66mm diameter.

In an advantageous embodiment, one helical leg of the component may extend further than the other helical leg, such that the longer helical leg may be connected to an arc protection device.

The invention also provides a helical fitting comprising two components as described above.

Another aspect of the invention provides a method of manufacturing a helical fitting for securing covered conductors to insulators, wherein a metal wire is formed into a required shape, and a semi-conductive coating material is subsequently applied to the wire.

In a preferred embodiment, the shape is that of an arcuate portion having one or two extending helical legs.

The metal wire used to make the helical fitting is preferably made of stainless steel, although other metals may be used. It may be shaped using dies in a cold forming process.

The semi-conductive coating may be applied by dipping, for example using a fluidised bed coating process. As a result, the wire is completely covered with the semi-conductive material. In the preferred process, the metal wire is pre-heated, preferably at a temperature of between 335°C and 370°C. Preferably, the material used for the coating is Vestosint 1111 Black 9.7639 (Polyamide 12 Powder with Carbon Black) and the preferred thickness is between 250 microns and 550 microns, more preferably between 450 and 550 microns.

An embodiment of the invention will now be described by way of example only and with reference to the accompanying drawings in which:
Figure 1 illustrates a conductor secured to an insulator with a helical fitting;
Figure 2 shows one component of the helical fitting before it is applied to the covered conductor;
Figure 3 is a cross-sectional view of the coated wire; and
Figure 4 is a flow chart illustrating the method of forming the components.

Referring firstly to figure 2, each helical fitting component 10 comprises a length of metal wire 20, coated with a semi-conductive coating. Each component is in the shape of an arcuate portion 21 having two extending helical legs 22, 23.

Figure 3 shows how the metal wire forms the core 31 of the component and is coated with the semi-conductive coating 32.

In use, the helical fitting is applied to a covered conductor I (figure 1) which locates around the neck of the insulator, in a locating groove (not shown).

The legs 22, 23 are then wrapped around the covered conductor, such that the two legs effectively form a double helix with the covered conductor 1 running along the axis. The legs therefore grip the covered conductor, and the helical fitting secures the covered conductor to the insulator. This application is repeated for the second element along the covered conductor on the opposite side of the insulator.

When the helical fitting is in position, the semi-conductive layer 32 performs the function of reducing the possibility of conductor arcing by reducing voltage stresses along the length of the conductor adjacent to the insulator and thus diminishes the possibility of the occurrence of RIV as detailed in the Post Office memorandum A231 (b) (issued under Engineering Recommendations PO.2, Reference - Electricity Supply Industry Standard 43-15).

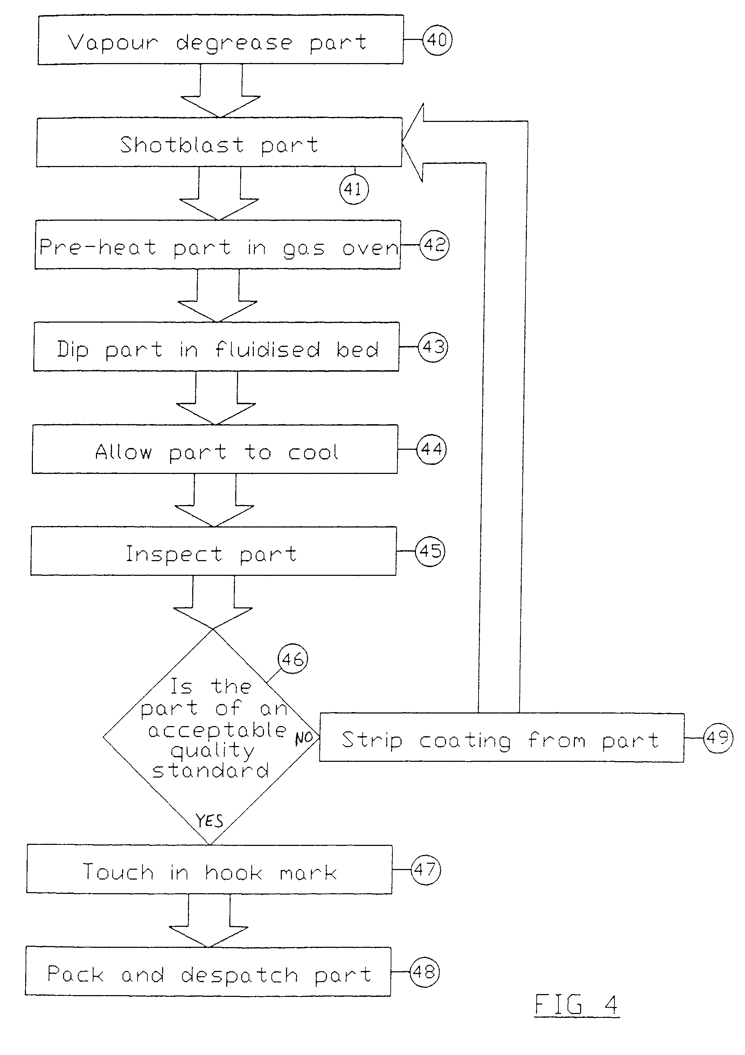

The process for manufacturing the component is illustrated schematically in figure 4. At step 40, the bare wire 20 is subjected to a vapour degreasing process, followed by shot blasting at step 41, to ensure that the surface of the metal is thoroughly clean for the application of the semiconductive coating. At step 42 the wire is preheated in a gas oven to a temperature of 335-370"C, following which it is dipped at step 43 in a fluidised (ie: granular), bed of polyamide 12 powder with carbon black. The component is allowed to cool at step 44 and inspected at step 45. A decision is made at step 46 as to whether the coating is of acceptable quality. If yes, at step 47 a hanging hook is removed and any mark made by the hook touched up and the part is packed and despatched at step 48. If no, the coating is stripped off the wire at step 49 and steps 41 to 46 are repeated.

It is important to note that the layer 32 covers the ends of the elements 20 whereby none of the metal is left exposed, in contrast to an extrusion process in which the ends of the coated material are uncovered.

## Claims

1. Component for securing a covered conductor to an insulator, comprising a length of metal wire which is coated with a semi-conductive coating material, and has at least one helical portion.

2. Component according to claim 1, wherein the metal wire is in the shape of an arcuate portion having two extending helical legs.

3. Component according to claim 1 or 2, wherein the metal wire is made of stainless steel.

4. Component according to any preceding claim, wherein the diameter of the metal wire is sufficiently large to secure a covered conductor without additional wires.

5. Component according any preceding claim, wherein the diameter of the metal wire is between 3.6mm and 3.7mm diameter.

6. Component according to any of the preceding claims, wherein the coating material is Polyamide 12 Powder with the addition of Carbon black.

7. Component according to any of the preceding claims, wherein the thickness of the coating is between 450 microns and 550 microns.

8. Component according to any of the preceding claims, wherein one of the legs extends further than the other leg.

9. Method of manufacturing a component of a helical fitting for securing covered conductors, wherein a metal wire is formed into a required shape, and a semi-conductive coating material is subsequently applied to the wire.

10. Method according to claim 9, wherein the shape is that of an arcuate portion having an extending helical leg.

11. Method according to claim 9 or 10, wherein the metal wire is shaped using a cold forming process.

12. Method according to any of claims 9 to 11, wherein the coating is applied by dipping the wire into the coating material.

13. Method according to any of claims 9 to 12, wherein the coating is applied using a fluidised bed coating process.

14. Method according to claim 13, wherein the wire is pre-heated to a temperature of between 335°C and 370°C.

15. Method according to any of claims 9 to 14, wherein the thickness of the coating is between 450 microns and 550 microns.
